# EUROPEAN PATENT APPLICATION

(11) **EP 0 700 701 A1**
(43) Date of publication of application: **13.03.1996**
(21) Application number: 95913442.0
(22) Date of filing: 06.03.1995
(51) Int. Cl.: A63G 31/16

(54) **PUBLIC ENTERTAINMENT SYSTEM WHICH CREATES THE ILLUSION OF MOVEMENT**

(30) Priority: 10.03.1994 RU 94007814
(71) Applicant: Romanov, Alexandr Alexeevich, Moscow, 125124 (RU); Zaderei, Alexandr Gennadievich, Moscow, 125080 (RU); Golovitsyn, Igor Stanislavovich, Moscow, 103482 (RU)
(72) Inventor: GOLOVITSYN, Igor Stanislavovich, Moscow, 103482 (RU)
(74) Representative: Godwin, Edgar James
(86) International application number: RU9500040
(87) International publication number: WO9524249

(57) **Abstract**

The invention relates to mass entertainment, specifically, to games systems. It can also be used for training aircraft and spacecraft crews. The invention creates the perfect illusion of being in a moving vessel and enhances the entertainment afforded by the system. This is achieved by the following features: four illuminating lamps (12) are provided in the passenger cabin (7); the base of the cabin is designed in the form of steps; the seats (8) are provided in addition with devices to imitate movement, the armrests (10) and head supports (9) are designed so as to be moveable and each seat has a device (13) for dynamically altering its position and sensors (15) for detecting the seat position; the device for forming a moving image is designed in the form of four cinema projectors (16), four screens with shutters (17), mechanisms (18) for opening the shutters and sensors (19) which detect the position of the shutters, four mirrors (20) and a unit (21) for controlling and monitoring the position of the shutters. The cabin is equipped with a sound reproduction system (22) and a lighting and presentation system (24). All the systems are controlled by a device (11) which forms control signals via the unit which controls and monitors the seats (14), the sound reproduction system control unit (23), and the lighting and presentation system control unit (25). In order to admit and release passengers, the cabin has doors (26) with opening mechanisms (27), sensors to detect their positions (28) and airlock chambers (29) with steps and doors, associated control mechanisms (30) and position sensors (31). Control is effected with the aid of signals from the control and monitoring unit for the airlock mechanisms and doors (32).

## Description

The present invention relates to the field of public entertainments, particularly, to playing facilities. The invention can also prove useful as a training aid for the crews of aircraft and spaceships.

Known in the prior art is an entertainment facility, US Patent No. 4798376, 1989, IPC A63G31/16 which simulates driving a transport vehicle. It comprises several capsules with chairs whose seats rock around their axes, devices for generating a moving picture consisting of a motion picture projector, a screen, and a capsule-moving device with three degrees of freedom.

Another known entertainment facility is covered by US Patent No. 4066256, IPC A63G31/16 published 1978, taken for the prototype. This entertainment facility comprises a dynamic motion-producing stand consisting of a stationary base, a movable platform, hydraulic cylinders with position transducers articulated to the base and the movable platform, a hydraulic station communicating hydraulically with each cylinder, a motion-control and platform-position monitoring unit whose control outputs are connected to the control inputs of the hydraulic station, the outputs of the hydraulic cylinder position sensors are connected with the corresponding inputs of the motion-control and platform-position monitoring unit, a passenger capsule with rows of chairs installed on the movable platform, a moving-picture generator and a device for generation of control signals whose control input is connected to the output of the moving-picture generator on a synchronizing signal.

The known entertainment facilities feature but an insufficient entertaining capacity. The invention claimed herein eliminates this disadvantage.

This is attained by providing a capsule with four windows disposed in front, on the roof and on the sides of the capsule; the capsule base with chairs is stepped, the chairs have movable head- and elbow-rests and a G-load simulating device with force and passenger-fixing transducers whose outputs are connected via a chair control and monitoring unit with the corresponding inputs of the control signal shaper, the control inputs of the G-load simulating device are connected via the chair control and monitoring unit with the corresponding outputs of the control signal shaper, each chair has a device for dynamic changes of its position whose inputs are connected via the chair control and monitoring unit with the corresponding outputs of the control signal shaper; in addition, each chair has a position transducer and the transducer outputs of all chairs are connected via the chair control and monitoring unit with the corresponding inputs of the control signal shaper; the moving-picture generator has the form of one-to-four cinema (video) projectors with the film readiness and breakage transducers, one-to-four screens with flaps installed opposite the corresponding windows, and one-to-four mirrors; the beam of each cinema projector is directed at the corresponding mirror and reflected on the reverse side of the screen, facing away from the passenger; the screen flaps have opening mechanisms and flap-position transducers, the outputs of the flap-position transducers of all the screens being connected via the flap-position control and monitoring unit with the corresponding inputs of the control signal shaper while the control inputs of the flap-opening mechanisms are connected via the flap-position control and monitoring unit with the corresponding outputs of the control signal shaper; projector which projects a picture on the front screen has an image clock pulse transducer whose output is connected with the control input of the control signal shaper, the control inputs of the beginning and end of picture projection of all the projectors are connected via the control and monitoring unit of the moving-picture generator with the corresponding outputs of the control signal shaper; the capsule also has a sound-reproducing system whose control outputs are connected via the control and monitoring unit of said system with the corresponding outputs of the control signal shaper, and a lighting and indication system comprising service and emergency lamps and draw-out indication panels, the control input of the lighting and indication system is connected via the control and monitoring unit of said system with the corresponding output of the control signal shaper; the capsule is provided with passenger entrance and exit doors and their opening mechanisms and position transducers, and with entrance locks having ladders and doors equipped with operating mechanisms and position transducers; the outputs of the lock door and lock mechanism position transducers are connected via the control and monitoring unit of the lock and door mechanisms with the corresponding inputs of the control signal shaper, the control inputs of the door opening and lock control mechanisms are connected via their control and monitoring unit with the corresponding outputs of the control signal shaper; the movable platform and stationary base are connected by six hydraulic cylinders, the latter being connected to the movable platform by articulated joints with three degrees of freedom, and to the stationary base by joints with two degrees of freedom; the entertainment facility also incorporates hydraulic accumulators communicating hydraulically with the hydraulic station and all the hydraulic cylinders.

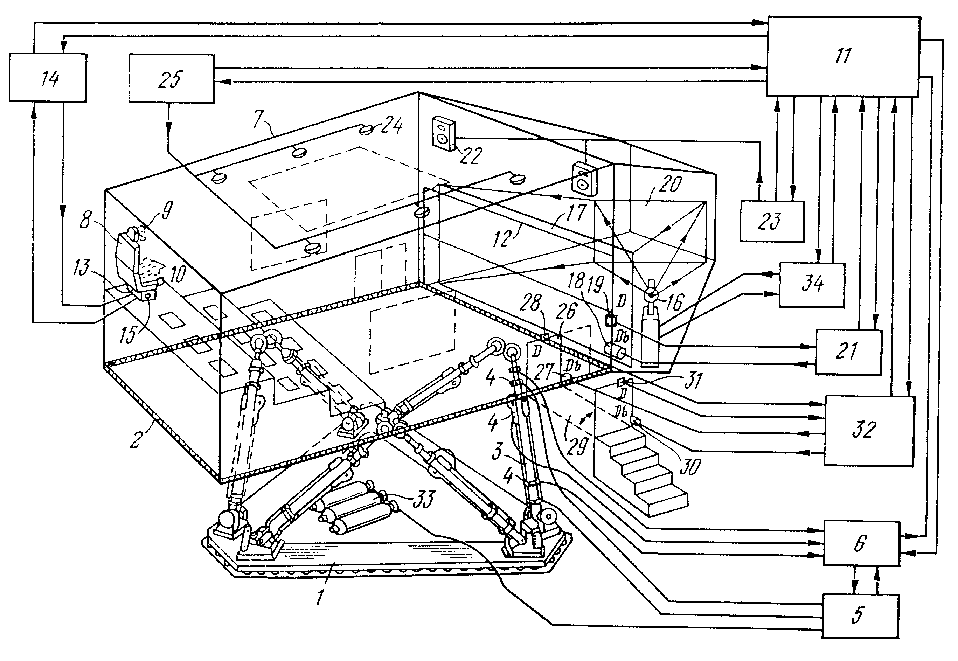

Shown in Fig. 1 is a functional diagram of the claimed entertainment facility (to promote readability, the diagram illustrates a chair with its mechanisms and transducers, a projector, etc.).

Symbols on the diagram:
- 1 -: stationary base of dynamic stand;
- 2 -: movable platform;
- 3 -: hydraulic cylinders;
- 4 -: hydraulic cylinder position transducers;
- 5 -: hydraulic station;
- 6 -: platform position control and monitoring unit;
- 7 -: passenger capsule;
- 8 -: chair;
- 9 -: chair head-rest;
- 10 -: chair elbow-rest;
- 11 -: control signal shaper;
- 12 -: capsule windows;
- 13 -: device for dynamic change of chair position;
- 14 -: chair control and monitoring unit;
- 15 -: chair position transducer;
- 16 -: cinema projector;
- 17 -: screen;
- 18 -: window flap opening mechanism;
- 19 -: flap position transducer;
- 20 -: mirror;
- 21 -: flap (capsule mechanisms) position control and monitoring unit;
- 22 -: sound-reproducing system;
- 23 -: sound-reproducing system control and monitoring unit;
- 24 -: lighting and indication system;
- 25 -: lighting and indication control and monitoring unit;
- 26 -: doors;
- 27 -: door opening mechanism;
- 28 -: door position transducer;
- 29 -: lock chamber;
- 30 -: lock door and ladder operating mechanisms;
- 31 -: lock door and ladder position transducers;
- 32 -: lock and door mechanism control and monitoring unit;
- 33 -: hydraulic accumulators;
- 34 -: moving-picture generator control and monitoring unit.

The entertainment facility is housed in a specially-designed hangar provided with all the requisite service lines. A movable platform 2 on a stationary base 1 pivotally interconnected with each other by hydraulic cylinders 3 are installed inside the hangar. A passenger capsule 7 is installed on the movable platform.

Passengers enter the capsule and leave it through two locks 29 on the sides of the capsule. The locks have ladders and doors with their operating mechanisms 30 and position transducers 31. They may be additionally fitted with escalators. Each lock has a steward's control panel for announcing the end of boarding. The capsule is provided with two entrance doors 26 with their opening mechanisms 27 and position transducers 28. Signals from all the transducers are received via the corresponding control and monitoring units at a control signal shaper 11. The control inputs of all the mechanisms receive the commands via the corresponding control and monitoring units from the control signal shaper. The capsule may be additionally equipped with emergency ladders.

The capsule has four windows (in front, in the roof and one on each side) provided with flaps. The latter are operated by opening mechanisms 18 and have position transducers 19. Signals generated by all the transducers pass through the corresponding control and monitoring units to the control signal shaper 11. The control inputs of all mechanisms receive commands through the corresponding control and monitoring units from the control signal shaper. The front and side flaps are made, each, of two halves while the roof flaps, of three parts which slide open in three directions. Screens 17 are installed on the external side of the capsule opposite each window, close thereto.

The capsule may be equipped with one-to-four cinema (video) projectors 16. They are capable of running the loops of threaded-in films (bifilar circular take-up). The projector of the front screen has a clock pulse transducer whose signal is sent directly to the control signal shaper 11. On this signal said shaper synchronizes control of the facility systems and mechanisms with the plot of the picture being projected. Each projector has film readiness and breakage transducers. The signals of all the transducers pass through a control and monitoring unit 34 to the control signal shaper 11. The control inputs of the mechanisms of all the projectors receive commands via the corresponding control and monitoring units from the control signal shaper. The beam of each projector is directed through mirrors at the screen surface facing away from the passengers. All the components of the cinema-projecting system and the path of the beam are out of the passengers' field of vision. This method of picture projection creates a complete illusion of sitting inside a moving transport vehicle.

A sound-reproducing system 22 may incorporate a source of stereosonic effects, amplifiers and sound-reproducing devices arranged in groups of four along the side walls in the capsule 7. The sound accompaniment is picked up from the sound track recorded on the film strip. Additional effects are introduced from a sound effect source whose control inputs are connected via a control and monitoring unit 23 to the corresponding control outputs of the control signal shaper 11.

The control signal shaper 11 acting via a platform position control and monitoring unit 6 moves the platform by the hydraulic system along three linear (vertical, longitudinal and transverse) and three angular (course, bank and pitch) degrees of freedom, coordinating them with the current plot on the screen. Each hydraulic cylinder 3 is secured to the movable platform 2 by a joint with three angular degrees of freedom while to the stationary base 1, by a joint with two angular degrees of freedom.

There are twenty nine passenger chairs 8 in the capsule arranged in the form of amphitheater, Each chair comprises a G-load simulating device with force and G-load transducers, made as a system of straps. The transducer outputs are connected via the chair control and monitoring unit 14 with the corresponding inputs of the control signal shaper 11. The control inputs of the G-load simulating device are connected across the chair control and monitoring unit 14 with the corresponding outputs of the control signal shaper 11. Headand elbow-rests of the chairs 8 are movable and each chair has a device 13 for dynamic change of its position. The control inputs of said device 13 are connected across the chair control and monitoring unit 14 with the corresponding outputs of the control signal shaper 11.

A lighting and indication system 24 is installed in the capsule. The continuously working service and emergency lighting is turned on by the operator at the beginning of a workshift. In case of a power failure, the lighting system is supplied from storage batteries. Complete lighting is turned on and off by the control signal shaper 11. Information on indication panels is also switched on by the shaper 11 when required by the current plot on the screen.

The entertainment facility has a self-contained air-conditioning system. It is started by the operator at the beginning of a workshift.

The external systems include a hydraulic station 5, and hydraulic accumulators 33. The mechanisms of the airconditioning system and power supply devices are installed disposed in separate compartments.

The operator an duty is stationed in front of the capsule in a compartment with a transparent partition. This compartment accommodates the operator's panel with control apparatuses, observation and monitoring equipment.

The working personnel includes 2 duty operators, one working at the operator's panel at all times, and two stewards.

The claimed entertainment facility functions as follows. At the beginning of a workshift the operator switches on power supply of all the systems and starts the air-conditioning system (not shown in the diagram). Then he starts the hydraulic station 5 which develops the required pressure and temperature in the "warm-up" mode. Then he starts the control program in the control signal shaper 11 (e.g. a computer). The control program checks all the systems of the facility for "starting position". This position is: (a) for platform 2:
specified temperature and pressure built up in the hydraulic system, rods of hydraulic cylinders 3 in middle position, platform position control and monitoring unit 6 sends the "platform position control system ready" signal into control signal shaper 11; (b) cinema projectors 16:
power ON, projectors send "ready" signals;
(c) chair operating mechanisms:
elbow-rests 10 lowered, head-rests 9 withdrawn, strap buckles released;
(d) window flap mechanisms 18:
all flaps closed;
(e) door opening mechanisms:
doors closed;
(f) mechanisms of lock chambers 29:
ladders lifted, doors closed, escalators (if any) switched off;
(h) lighting and indication system 24:
service lighting ON, no information on all panels.

In absence of the "initial position" in some system of the facility, the control program of the control signal shaper 11 generates a signal "no initial position" and blocks the possibility of sending commands for "boarding" and "flight" modes. As the initial position is reached, the "no initial position" signal vanishes and the possibility of delivering control commands is unblocked.

As the "boarding" command is entered, the control program of the control signal shaper 11 sends command signals to the unit 6 for lowering the platform 2 with the capsule 7 to the downmost position. As the platform comes to this position, the control signal shaper 11 receives the "downmost position" signal through the unit 6. On receiving this signal the control program of the shaper 11 sends the following command signals:
- to unit 32 for the mechanisms of the locks 30 to lower the doors and start the escalators (if any);
- to unit 32 for the door opening mechanisms 27 of the capsule to open the doors 26;
- to unit 25 to switch on complete lighting of the system 24.

Sending of the "flight" command by the operator is blocked until boarding is completed.

A steward meets the passengers at the lock entrance, ushers them into the capsule, assists in occupying their seats and sees that they are properly seated and have fastened their belts. Then he comes out to the platform of the lock chamber 29 and pushes the "boarding completed" button. On receiving this signal, the control program of the control signal shaper 11 gives a message to the operator "boarding completed" and unblocks the possibility of sending the "flight" command. If the boarding procedure takes place after the flight then, after receiving the platform 2 downmost position signal from the unit 6, the program sends a "flight completed" message and returns to the boarding mode. The operator additionally checks the possibility of boarding and enters the "boarding" command. The further steps are similar to those of the first boarding.

On receiving the "flight" command, the control program of the control signal shaper 11 produces a command to the unit 14 for lifting the elbow-rests, then to the unit 32 for closing the doors 26, to the unit 32 for closing the lock doors, retracting the ladders and stopping the escalators. After these commands have been executed by the corresponding mechanisms new commands are given to the projectors 16 to start projecting a film. The projector emitting a picture on the front screen sends clock pulses to the control signal shaper 11, and the control program responds by opening the window flaps, moving the platform in space, simulating G-loads, producing dynamic effects, switching on indication panels and sound effects through the respective control units. This creates a complete illusion of sitting in a moving transport vehicle. The other projectors function in a slave mode.

The film script is set up so that the platform 2 goes to the downmost position at the end of the film. On receiving the "downmost position" signal from the unit 6 and the "end of film" signal from the unit 34, the control program sends a "flight completed" message to the operator. The operator can start the boarding mode as described above.

To round up all work, the operator gives the "stop" command. The control program reminds him that this command has been given and after the next boarding it blocks the "flight" command and shifts all the systems of the entertainment facility to the initial position. As they have come to the initial position, the operator may either turn off the power supply by the procedure specified in the Instruction Manual or resume work. After the initial position the operator can enter the "flight" command and the control program will carry out a "test flight" without passengers.

At present, the claimed invention is the most thrilling entertainment facility which produces a true feeling of a car drive.

The Applicant is in possession of design and engineering documents related to the claimed facility which will enable the Customer to quickly start its production and operation.

## Claims

1. A motion-simulating entertainment facility comprising a dynamic stand for effecting motions made up of a stationary base, a movable platform, hydraulic cylinders fitted with position transducers and articulated to the base and the movable platform, a hydraulic station communicating hydraulically with each cylinder, a platform position control and monitoring unit whose control outputs are connected with the control inputs of the hydraulic station, the outputs of the hydraulic cylinder position transducers are connected with the corresponding inputs of the platform position control and monitoring unit, a passenger capsule with rows of chairs installed on the movable platform, a moving-picture generator and a control signal shaper whose control input is connected to the output of the moving-picture generator on a synchronizing signal CHARACTERIZED in that the capsule has four windows disposed in front, on the roof and on the sides of the capsule; the capsule base with chairs is stepped, the chairs have movable head- and elbow-rests and a G-load simulating device with force and passenger-fixing transducers whose outputs are connected via a chair control and monitoring unit with the corresponding inputs of the control signal shaper, the control inputs of the G-load simulating device are connected via the chair control and monitoring unit with the corresponding outputs of the control signal shaper, each chair has a device for dynamic changes of its position whose inputs are connected via the chair control and monitoring unit with the corresponding outputs of the control signal shaper; in addition, each chair has a position transducer and the transducer outputs are connected via the chair control and monitoring unit with the corresponding inputs of the control signal shaper; the moving-picture generator has the form of one-to-four cinema (video) projectors with the film readiness and breakage transducers, one-to-four screens with flaps installed opposite the corresponding windows and one-to-four mirrors; the beam of each cinema projector is directed at the corresponding mirror and reflected on the reverse side of the screen, facing away from the passenger; the screen flaps have opening mechanisms and flap-position transducers, the outputs of the flap-position transducers of all the screens being connected via the flap-position control and monitoring unit with the corresponding inputs of the control signal shaper while the control inputs of the flap-opening mechanisms are connected via the flap-position control and monitoring unit with the corresponding outputs of the control signal shaper; the projector which projects a picture on the front screen has an image clock pulse transducer, whose output is connected with the control input of the control signal shaper, the control inputs of the beginning and end of picture projection of all the projectors are connected via the control and monitoring unit of the moving-picture generator with the corresponding outputs of the control signal shaper while the outputs of the film readiness and breakage transducers are connected via the control and monitoring unit of the moving-picture generator with the corresponding inputs of the control signal shaper; the capsule also accommodates a sound-reproducing system whose control inputs are connected via the corresponding control and monitoring unit with the corresponding outputs of the control signal shaper; a lighting and indication system comprises service and emergency lamps and draw-out indication panels, the control input of the lighting and indication system is connected via the lighting and indication control and monitoring unit with the corresponding output of the control signal shaper; the capsule has passenger entrance and exit doors with opening mechanisms and position transducers, and entrance locks having ladders and doors equipped with control mechanisms and position transducers; the outputs of the lock door and lock mechanism position transducers are connected via their control and monitoring unit with the corresponding inputs of the control signal shaper, the control inputs of the door opening and lock control mechanisms are connected via the control and monitoring unit of the lock and door mechanisms with the corresponding outputs of the control signal shaper; the movable platform and stationary base are connected by six hydraulic cylinders, the latter being connected to the movable platform by articulated joints with three degrees of freedom, and to the stationary base, by joints with two degrees of freedom; the entertainment facility also incorporates hydraulic accumulators communicating hydraulically with the hydraulic station and all hydraulic cylinders.
